# EUROPÄISCHE PATENTSCHRIFT

(11) **EP 1 514 750 B1**
(45) Veröffentlichungstag und Bekanntmachung des Hinweises auf die Patenterteilung: **23.01.2008**
(21) Anmeldenummer: 04012828.2
(22) Anmeldetag: 29.05.2004
(51) Int. Cl.: B60S 1/08

(54) **Kombinierte Sensoranordnung zur Detektion von Umgebungslicht und Regen**
Sensor assembly for detecting environmental light and rain
Capteurs combinés pour détecter la lumière environnante et la pluie

(30) Priorität: 12.09.2003 DE 10342159
(43) Veröffentlichungstag der Anmeldung: 16.03.2005
(73) Patentinhaber: ROBERT BOSCH GMBH, 70442 Stuttgart (DE)
(72) Erfinder: Mounawar, Mounaime, 67000 Strasbourg (FR); Wolf, Frank, 77815 Buehl (DE); Pientka, Rainer, 77871 Renchen (DE)

(56) Entgegenhaltungen:
- EP-A- 0 694 456
- WO-A-01/98121
- WO-A-99/21206
- WO-A-99/47396
- DE-A1- 19 846 969
- FR-A- 2 722 291

## Beschreibung

Die Erfindung betrifft eine kombinierte Sensoranordnung zur Detektion von Umgebungslicht und zur Detektion von Regen. Insbesondere im Automobilbereich werden Sensoren verwendet, um das Auftreffen von Regentropfen auf die Windschutzscheibe bei Regen zu detektieren und entsprechend automatisch die damit verbundene Wischanlage anzusteuern, so dass ohne manuelles Zutun eine klare Sicht für den Fahrer des Fahrzeuges gewährleistet bleibt. Weiterhin werden häufig Umgebungslichtsensoren verwendet, um z.B. automatisch die Scheinwerfer ein bzw. auszuschalten, wenn sich das Umgebungslicht ändert.

Umgebungslichtsensor und Regensensor werden in neuerer Zeit kombiniert ausgeführt. Üblicherweise wird bei einem Regensensor Regen durch das Auftreten von Tröpfchen auf der Windschutzscheibe detektiert. Dazu wird eine Strahlungssendeeinheit, die Strahlung emittiert, die in ein strahlungleitendes Gehäuseteil eingekoppelt wird, und eine Strahlungsempfangseinheit benötigt. Die Reflektion an einer Oberfläche, auf die die Regentropfen auftreffen können, wird gemessen, um festzustellen, ob es regnet oder nicht. Die von der Strahlungssendeeinheit ausgesendete Strahlung, liegt üblicherweise in einem Wellenlängenbereich, in dem auch der Umgebungslichtsensor empfindlich ist. Dies führt zu einer Beeinflussung des Umgebungslichtsensors durch den Regensensor, was zu einer fehlerhaften Messung des Umgebungslichtes führen kann.

Ferner können durch das strahlungsleitende Gehäuseteil auch Anteile des Umgebungslichts auf den Umgebungslichtsensor aus Richtungen geleitet werden, in denen der Umgebungslichtsensor nicht von Umgebungslicht beeinflussbar sein soll. Weiterhin kann das durch das Gehäuseteil ins Innere der Sensoranordnung eindringende Umgebungslicht die Strahlungsempfangseinheit nachteilig beeinflussen.

Aus der WO-A-01/98121 ist darüber hinaus eine Sensoranordnung mit den Merkmalen des Oberbegriffs des Anspruchs 1 bekannt.

Es ist daher Aufgabe der vorliegenden Erfindung eine kombinierte Sensoranordnung zur Detektion von Umgebungslicht und zur Detektion von Regen zur Verfügung zu stellen.

Diese Aufgabe wird durch die kombinierte Sensoranordnung nach Anspruch 1 gelöst.

Weitere vorteilhafte Ausgestaltungen der Erfindung sind in den abhängigen Ansprüchen angegeben.

Erfindungsgemäß ist eine kombinierte Sensoranordnung zur Detektion von Umgebungslicht und zur Detektion von Regen vorgesehen. Die Sensoranordnung weist eine erste Sensoreinrichtung zur Erkennung von Tropfen auf einer Oberfläche auf. Die erste Sensoreinrichtung umfasst eine Strahlungssendeeinheit, die eine Strahlung so auf eine Oberfläche emitiert, dass die Strahlung im Wesentlichen an einer Reflektionsstelle der Oberfläche in Richtung einer Strahlungsempfangseinheit reflektiert wird. Abhängig von der Strahlungsstärke der reflektierten Strahlung, kann das Vorhandensein von Tropfen auf der Oberfläche bestimmt werden. Die Sensoranordnung umfasst eine zweite Sensoreinrichtung, um die Stärke des Umgebungslichtes zu bestimmen. Die zweite Sensoreinrichtung weist einen Lichtsensor auf, um die Stärke von Lichtstrahlen aus einer bestimmten Richtung zu messen. Die Sensoranordnung ist in einem Gehäuse angeordnet, wobei die zweite Sensoreinrichtung durch eine Abschirmblende von der von der Strahlungssendeeinheit emitierten Strahlung und/oder von Lichtstrahlen, die aus anderen als der bestimmten Richtung einfallen, abgeschirmt ist, und/oder wobei die Strahlungsempfangseinheit vom einfallenden Umgebungslicht abgeschirmt ist.

Auf diese Weise ist es möglich, eine kombinierte Sensoranordnung zu schaffen, bei der die zweite Sensoreinrichtung zur Detektion der Stärke des Umgebungslichtes in unmittelbarer Nähe zu einer ersten Sensoreinrichtung zur Erkennung von Tropfen auf einer Oberfläche angeordnet ist, ohne das die zweite Sensoreinrichtung von der von der Strahlungssendeeinheit der ersten Sensoreinrichtung emitierten Strahlung beeinflusst wird. Dadurch ist eine genauere Detektion des Umgebungslichtes möglich. Ferner lässt sich dadurch auch erreichen, dass Fremdlicht von der zweiten Sensoreinrichtung abgeschirmt wird, dass durch etwaige optische Mittel für die erste Sensoreinrichtung kein unerwünschtes Umgebungslicht auf die zweite Sensoreinrichtung geleitet wird. Darüber hinaus bietet die Abschirmblende ein Hindernis von in das Gehäuse einfallendes Umgebungslicht, so dass die Strahlungsempfangseinheit von dem Umgebungslicht abgeschirmt wird. Ferner kann durch die kombinierte Ausführung der Regensensor und der Umgebungslichtsensor in einfacher Weise realisiert werden. Da es insbesondere im Automobilbereich gewünscht ist, das Umgebungslicht nur aus einer bestimmten Richtung bzw. nur aus einem begrenzten Winkelbereich zu detektieren, kann zudem über die Abschirmblende dieser Winkelbereich ausgewählt werden.

Vorzugsweise sind die Strahlungssendeeinheit und die Strahlungsempfangseinheit sowie der Lichtsensor in dem Gehäuse so angeordnet, dass die Reflektionsstelle außerhalb eines Durchlassbereiches für das von dem Lichtsensor zu messende Licht liegt.

Auf diese Weise kann in einer besonders kompakten Anordnung die erste Sensoreinrichtung mit der zweiten Sensoreinrichtung kombiniert werden.

Insbesondere ist der Lichtsensor vorzugsweise zwischen der Strahlungssendeeinheit und der Strahlungsempfangseinheit der ersten Sensoranrichtung angeordnet.

Das Gehäuse kann eine lichtleitende Abdeckung aufweisen, die so gestaltet ist, um die von der Strahlungssendeeinheit emitierte Strahlung einzukoppeln und die eingekoppelte Strahlung nach ihrer Reflektion an der Oberfläche so auszulassen, um die Strahlung der Strahlungsempfangseinheit zuzuführen.

Die lichtleitende Abdeckung weist mindestens eine weitere Oberfläche auf, die so gestaltet ist, um die emitierte Strahlung in einen Strahlungseintrittsbereich der Abdeckung und/oder die reflektierte Strahlung auf die Strahlungsempfangseinheit zu lenken. Auf diese Weise ist es möglich, die emitierte Strahlung in den Strahlungseintrittsbereich zu bündeln, so dass möglichst wenig der emitierten Strahlung auf den Lichtsensor fällt.

Die lichtleitende Abdeckung weist einen ersten Bereich auf, um die im Wesentlichen von der Strahlungssendeeinheit emitierte Strahlung zu leiten und einen zweiten Bereich auf, um das Umgebungslicht auf den Lichtsensor zu leiten. Vorzugsweise ist der erste Bereich so ausgebildet, um im Wesentlichen nur die von der Strahlungssendeeinheit vorzugsweise emitierte Infrarotstrahlung zu leiten.

Auf diese Weise kann verhindert werden, dass in den ersten Bereich eingekoppeltes Umgebungslicht auf den Lichtsensor geleitet wird.

Die zweite Sensoreinrichtung kann auf einer Leiterplatte angeordnet sein, wobei die Abschirmblende im Wesentlichen so zwischen der Leiterplatte und der Abdeckung angeordnet ist, dass ein seitliches Auftreffen von Störstrahlung blockiert wird. Die Störstrahlung kann insbesondere die von der Strahlungssendeeinheit emitierte Strahlung bzw. die durch die lichtleitende Abdeckung in Richtung der zweiten Sensoreinrichtung gelenktes Umgebungslicht sein. Die Abschirmblende ist vorzugsweise im Wesentlichen hohlzylinderförmig zwischen der Leiterplatte und der Abdeckung angeordnet.

Die Abschirmblende kann weiterhin mehrteilig mit mehreren zylindrischen Hohlzylinderteilen an einem Bodenteil des Gehäuses angeordnet sein, so dass eine hohlzylindrische Abschirmblende mit einem oder mehreren in Längsrichtung verlaufenden Schlitzen gebildet ist. Die Leiterplatte weist diesbezüglich eine dem Querschnitt der Abschirmblende entsprechende Ausnehmung auf, durch die die Abschirmblende verläuft. Auf diese Weise kann die Abschirmblende fest mit dem Gehäuse, insbesondere mit dem Bodenteil des Gehäuses, verbunden sein und gleichzeitig als Positionierung für die Leiterplatte, auf der der Lichtsensor angeordnet ist, dienen.

Im Folgenden werden bevorzugte Ausgestaltungen der Erfindung in Verbindung mit weiteren Merkmalen anhand der beigefügten Zeichnungen näher erläutert. Es zeigen:
Fig. 1 eine Draufsicht auf eine kombinierte Sensoranordnung gemäß einer bevorzugten Ausführungsform der Erfindung; und
Fig. 2 eine Querschnittsansicht der kombinierten Sensoranordnung gemäß der Ausführungsform nach Fig. 1.

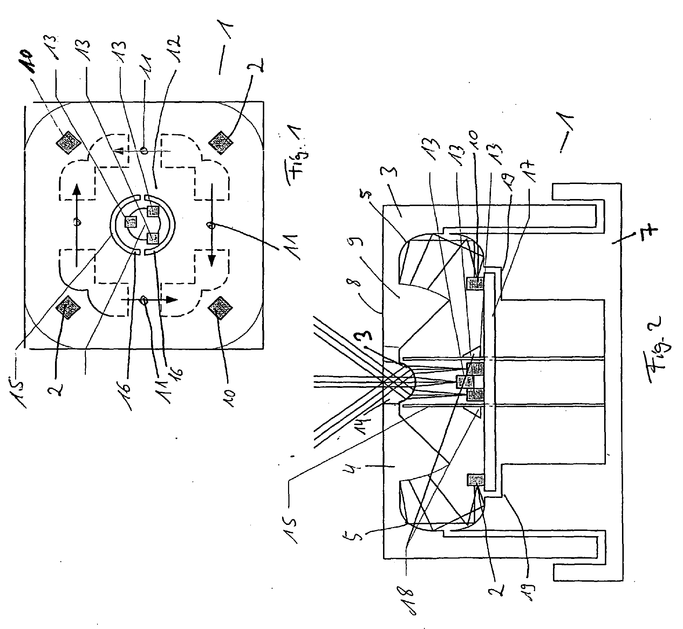

In Fig. 1 ist eine Draufsicht auf eine bevorzugte Ausführungsform einer kombinierten Sensoranordnung 1 dargestellt. Sie weist in einem Gehäuse eine erste Sensoreinrichtung zur Detektion eines Vorhandenseins von Tröpfen auf der Oberfläche des Gehäuses und eine zweite Sensoreinrichtung zur Detektion des Umgebungslichtes auf.

Das Gehäuse ist im Wesentlichen viereckig und zweiteilig mit einer im Wesentlichen lichtleitenden Abdeckung 3 und einem Bodenteil 7 ausgebildet, wobei die Abdeckung 3 in das Bodenteil 7 so einsetzbar ist, dass es in Ausnehmungen zumindest gegen seitliches Verrutschen gehalten wird.

Die erste Sensoreinrichtung umfasst im gezeigten Ausführungsbeispiel zwei Strahlungssendeeinheiten 2, die an gegenüberliegenden Ecken des viereckig ausgebildeten Gehäuses angeordnet sind. Die Anzahl der Strahlungssendeeinheiten 2 ist jedoch je nach verfügbaren Platz beliebig wählbar. Die Strahlungssendeeinheiten 2 emitieren eine Strahlung, die an der Oberfläche der lichtleitenden Abdeckung 3 reflektiert werden soll und anschließend durch an den jeweils anderen Ecken des viereckig ausgebildeten Gehäuses angeordneten Strahlungsempfangseinheiten 10 empfangen werden soll. Die Strahlungssendeeinheiten 2 sind vorzugsweise mit einer LED versehen, die Strahlung einer bestimmten Wellenlänge oder Strahlung eines vorbestimmten Wellenlängenbereiches aussendet. Entsprechend sind die Sendeempfangseinheiten 10 so ausgebildet, um die von den Strahlungssendeeinheiten 2 ausgesendete Strahlung empfangen zu können.

Um die ausgesendete Strahlung den Strahlungsempfangseinheiten 10 zuzuführen, ist die Abdeckung 3 als Lichtleiter ausgebildet, in den die von den Strahlungssendeeinheiten 2 emitierte Strahlung eingekoppelt wird und einer jeweiligen Reflektionsstelle 11 an der Grenzfläche 8 zwischen den der Abdeckung und der Umgebung reflektiert wird. Bei zwei Strahlungssendeeinheiten 2 und zwei Strahlungsempfangseinheiten 10 entstehen somit vier Reflektionsstellen 11 an der Oberfläche der Abdeckung 3. Das Auftreten von Regen wird detektiert, indem festgestellt wird, ob sich das Reflektionsverhalten an einer oder mehreren der Reflektionsstellen 11 durch ein Vorhandensein von Tröpfchen oder Feuchtigkeit (z.B. durch einen Wasserfilm) ändert. Um die emitierte Strahlung den Reflektionsstellen 11 zuzuführen, ist die Abdeckung 3 mit einem ersten Lichtleiterbereich 4 versehen, in den die von den Strahlungssendeeinheiten 2 emitierte Strahlung über Reflektionsflächen 5 eingekoppelt wird. Die eingekoppelte Strahlung wird durch die lichtleitende Abdeckung 3 der jeweiligen Reflektionsstellen 11 zugeführt und von dort über einen zweiten Lichtleiterbereich 9 der Abdeckung 3 in den Bereich der jeweiligen Strahlungsempfangseinheit 10 geleitet. Nach dem Austritt der reflektierten Strahlung aus dem zweiten Lichtleiterbereich 9 wird die reflektierte Strahlung an entsprechenden Reflektionsstellen 5 der Abdeckung 3 sowie des Bodenteils 7 auf die Strahlungsempfangseinheit 10 gelenkt. Um die Detektion von Feuchtigkeit auf der Grenzfläche 8 möglichst von dem Umgebungslicht unabhängig zu machen, ist die lichtleitende Abdeckung 3 im Wesentlichen so eingefärbt, dass nur die Wellenlänge oder im Wesentlichen nur die Wellenlängen der emitierten Strahlung geleitet werden, während andere Wellenlängen, die nicht von der Strahlungssendeeinheit 2 emitiert werden, nicht geleitet werden oder stark gedämpft werden.

In einem Mittenbereich 12 der Sensoranordnung ist die zweite Sensoreinrichtung angeordnet. Sie umfasst im Wesentlichen drei Lichtsensoren 13 mit denen einfallendes Umgebungslicht detektiert werden kann. Die Stärke des Umgebungslichtes wird in jedem der Lichtsensoren 13 gemessen und von einer (nicht gezeigten) Auswerteeinheit ausgewertet. Damit das Umgebungslicht auf die Lichtsensoren 13 fallen kann, ist ein Fensterbereich 14 in der Abdeckung nicht eingefärbt, so dass im Wesentlichen alle Wellenlängen des Umgebungslichtes auf die Lichtsensoren 13 gelangen können. Der Fensterbereich 14 ist als Sammellinse ausgestaltet, so dass ein durch die Brennweite der Sammellinse 14 definierter Winkelbereich des Umgebungslichtes auf die Lichtsensoren 13 gelenkt wird. Der Bereich zwischen den Lichtsensoren 13 und dem Fensterbereich 14 der Abdeckung 3 ist so mit einer Abschirmung 15 versehen, dass seitlich kein Licht auf die Lichtsensoren 13 einfallen kann. Ferner dient die Abschirmung 15 dazu, dass Umgebungslicht von den Strahlungsempfangseinheiten 12 ferngehalten wird.

Somit kann verhindert werden, dass von den Strahlungssendeeinheiten 2 emitiertes Licht bzw. von den Reflektionsflächen 5 nicht in den ersten Lichtleiterbereich 4 eingekoppeltes Licht auf die Lichtsensoren 13 fallen kann. Die Abschirmung 15 ist vorzugsweise aus einem lichtundurchlässigen Material gefertigt, zumindest aber so gestaltet, um Strahlung der Wellenlänge der emitierten Strahlung der Lichtsendeeinheit 2 nicht auf die Lichtsensoren 13 treffen zu lassen. Die Abschirmung 15 ist vorzugsweise aus zwei Hohlzylinderhälften 16 ausgebildet, die an dem Bodenteil 7 des Gehäuses so befestigt sind, dass sie in Richtung der Abdeckung 3 abstehen. Die Hohlzylinderteile 16 sind zueinander beabstandet angeordnet, so dass ein Hohlzylinder mit zwei einander gegenüberliegenden Schlitzen gebildet wird. Der Querschnitt des Hohlzylinders bzw. die Anzahl der Schlitze in dem Hohlzylinder sind im Wesentlichen frei wählbar.

Die Lichtsensoren 13 sowie die Strahlungssende- und Empfangseinheiten 2, 10 sind auf einer Leiterplatte 17 angeordnet, auf der sich weiterhin eine Auswerteschaltung befinden kann, mit der die gemessenen Lichtstärken ausgewertet werden können. Die Leiterplatte 17 weist entsprechend dem Querschnitt der Abschirmung 15 Öffnungen auf, durch die die Abschirmung 15 im zusammengesetzten Zustand reicht. Die Schlitze in der Abschirmung 15 dienen dazu, um den Teil der Leiterplatte 17, auf dem die Lichtsensoren 13 angeordnet sind, im Inneren der Abschirmung 15 sicher zu halten. Je größer die Anzahl der Schlitze in dem Hohlzylinder desto mehr Stege zwischen dem äußeren Bereich und dem inneren Bereich der Leiterplatte 17 können ausgebildet sein, um den inneren Bereich der Leiterplatte 17 zu halten.

Die Hohlzylinderteile 16 können des weiteren Nasen 18 aufweisen, um die Leiterplatte 17 bei Einsetzen in das Gehäuse gegen ein Verschieben entlang der Abschirmung 15 zu halten. Des weiteren liegt die Leiterplatte 17 auf Auflageflächen 19 des Bodenteils 7 auf. Die Nasen 18 können beispielsweise aus der Abschirmung 15 gestanzt sein, so dass diese auf einfache Weise gefertigt sind. Durch das Aufliegen der Leiterplatte 17 auf den Auflageflächen 19 des Bodenteils, werden die Strahlungssendeeinheiten 2 und die Strahlungsempfangseinheiten 10 so in dem Gehäuse positioniert, dass die an den Reflektionsflächen 5 reflektierte emitierte Strahlung optimal in die lichtleitende Abdeckung 3 eingekoppelt bzw. ausgekoppelt und auf die Strahlungsempfangseinheiten 10 gelenkt wird.

Die Anordnung von Strahlungssendeeinheiten 2, Strahlungsempfangseinheiten 10 und Lichtsensoren 13 ist im Wesentlichen beliebig wählbar. Um jedoch eine geringst mögliche Beeinflussung der Lichtsensoren 13 durch die Strahlungssendeeinheiten 2 zu gewährleisten, sind die Reflektionsstellen zwischen den Strahlungssendeeinheiten 2 und den Strahlungsempfangseinheiten 10 so anzuordnen, dass sie außerhalb des Fensterbereiches 14 der Abdeckung 3 liegen, so dass an der Reflektionsstelle 11 gestreute Strahlung nicht auf die Lichtsensoren 13 fallen kann. Des weiteren ist es somit möglich, das Fenster 14 in der Abdeckung 3 so auszugestalten, dass der Winkelbereich aus dem Umgebungslicht auf die Lichtsensoren 13 gelenkt wird, optimal entsprechend den Erfordernissen der Anwendung gewählt werden kann. Dazu kann die Oberfläche 8 der Abdeckung 3 entsprechend mit einer Wölbung im Fensterbereich 14 versehen sein, um eine Sammellinse bzw. eine Streulinse zu bilden.

## Patentansprüche

1. Kombinierte Sensoranordnung (1) zur Detektion von Umgebungslicht und zur Detektion von Regen mit einer ersten Sensoreinrichtung zur Erkennung von Tropfen auf einer Oberfläche, wobei die erste Sensoreinrichtung eine Strahlungssendeeinheit (2) aufweist, die eine Strahlung so auf eine Oberfläche emittiert, dass die Strahlung im wesentlichen an einer Reflektionsstelle (11) der Oberfläche in Richtung einer Strahlungsempfangseinheit (10) reflektiert wird, wobei abhängig von der Strahlungsstärke der reflektierten Strahlung ein Vorhandensein von Tropfen auf der Oberfläche bestimmbar ist,mit einer zweiten Sensoreinrichtung zur Bestimmung der Stärke des Umgebungslichts, die einen Lichtsensor (13) aufweist, um die Stärke von Lichtstrahlen aus einer bestimmten Richtung zu messen, wobei die Sensoranordnung (1) in einem Gehäuse (3, 7) angeordnet ist, und die zweite Sensoreinrichtung durch eine Abschirmblende (15) von der von der Strahlungssendeeinheit (2) emittierten Strahlung und/oder von Lichtstrahlen, die aus anderen als der bestimmten Richtung einfallen, abgeschirmt ist, **dadurch gekennzeichnet, daß** das Gehäuse (3, 7) eine lichtleitende Abdeckung (3) aufweist, die so gestaltet ist, um die von der Strahlungssendeeinheit (2) emittierte Strahlung einzukoppeln und die eingekoppelte Strahlung nach ihrer Reflektion so auszulassen, um die Strahlung der Strahlungsempfangseinheit (10) zuzuführen.

2. Sensoranordnung nach Anspruch 1, **dadurch gekennzeichnet, dass**
die Strahlungssendeeinheit (2) und die Strahlungsempfangseinheit (10) sowie der Lichtsensor in dem Gehäuse (3, 7) so angeordnet sind, dass die Reflektionsstelle (11) außerhalb eines Durchlassbereiches für das von dem Lichtsensor zu messende Licht liegt.

3. Sensoranordnung nach Anspruch 1 oder 2, **dadurch gekennzeichnet, dass** der Lichtsensor (13) zwischen der Strahlungssendeeinheit (2) und der Strahlungsempfangseinheit (10) angeordnet ist.

4. Sensoranordnung (1) nach einem der Ansprüche 1 bis 3, **dadurch gekennzeichnet, dass** die lichtleitende Abdeckung (3) mindestens eine weitere Oberfläche aufweist, die so gestaltet ist, um die emittierte Strahlung in einen Strahlungseintrittsbereich der Abdeckung und/oder die reflektierte Strahlung auf die Strahlungsempfangseinheit (10) zu lenken.

5. Sensoranordnung (1) nach einem der Ansprüche 1 bis 4, **dadurch gekennzeichnet, dass**
die lichtleitende Abdeckung einen ersten Bereich aufweist, um die im wesentlichen von der Strahlungssendeeinheit (2) emittierte Strahlung zu leiten und einen zweiten Bereich aufweist, um das Umgebungslicht auf den Lichtsensor (13) zu leiten.

6. Sensoranordnung (1) nach Anspruch 5, **dadurch gekennzeichnet, dass**
die Strahlungssendeeinheit (2) Infrarot-Strahlung emittiert und der erste Bereich so gestaltet ist, um im wesentlichen nur Infrarot-Strahlung zu leiten.

7. Sensoranordnung (1) nach einem der Ansprüche 1 bis 6, **dadurch gekennzeichnet, dass**
die zweite Sensoreinrichtung auf einer Leiterplatte (17) angeordnet, wobei die Abschirmblende (3) im wesentlichen so zwischen der Leiterplatte (17) und der Abdeckung angeordnet ist, dass ein seitliches Auftreffen von emittierter Strahlung und/oder Lichtstrahlen aus einer anderen als der bestimmten Richtung blockiert wird.

8. Sensoranordnung (1) nach Anspruch 7, **dadurch gekennzeichnet, dass**
die Abschirmblende (15) im wesentlichen hohlzylinderförmig zwischen der Leiterplatte (17) und der Abdeckung angeordnet ist.

9. Sensoranordnung (1) nach Anspruch 7 oder 8, **dadurch gekennzeichnet, dass** die Abschirmblende mehrteilig mit mehreren zwei teilzylindrischen Hohlzylinderteilen (16) an einem Bodenteil (7) des Gehäuses (3, 7) angeordnet ist, so dass eine hohlzylindrische Abschirmblende (15) mit einem oder mehreren in Längsrichtung verlaufenden Schlitzen gebildet ist, wobei die Leiterplatte eine dem Querschnitt der Abschirmblende (15) entsprechende Ausnehmung aufweist, durch die die Abschirmblende (15) verläuft.

## Claims

1. Combined sensor arrangement (1) for detecting surrounding light and for detecting rain, having a first sensor device for detecting drops on a surface, the first sensor device having a radiation transmission unit (2) emitting radiation onto a surface in a manner such that the radiation is substantially reflected at a reflection location (11) on the surface in the direction of a radiation receiving unit (10), wherein the presence of drops on the surface can be determined as a function of the radiation intensity of the reflected radiation, having a second sensor device for determining the intensity of the surrounding light, which second sensor device has a light sensor (13) for measuring the intensity of light beams from a specific direction, wherein the sensor arrangement (1) is arranged in a housing (3, 7) and the second sensor device is shielded from the radiation emitted by the radiation transmission unit (2) by a shielding screen (15) and/or from light beams which are incident from a direction other than the specific direction, **characterized in that** the housing (3, 7) has a light-guiding cover (3) which is designed such that the radiation emitted by the radiation transmission unit (2) can be input and the input radiation can be output after its reflection such that the radiation can be supplied to the radiation receiving unit (10).

2. Sensor arrangement according to Claim 1, **characterized in that** the radiation transmission unit (2) and the radiation receiving unit (10) and the light sensor in the housing (3, 7) are arranged such that the reflection location (11) lies outside a passage region for the light to be measured by the light sensor.

3. Sensor arrangement according to Claim 1 or 2, **characterized in that** the light sensor (13) is arranged between the radiation transmission unit (2) and the radiation receiving unit (10).

4. Sensor arrangement (1) according to one of Claims 1 to 3, **characterized in that** the light-guiding cover (3) has at least one further surface which is designed such that the emitted radiation can be directed into a radiation entry region of the cover and/or the reflected radiation can be directed onto the radiation receiving unit (10).

5. Sensor arrangement (1) according to one of Claims 1 to 4, **characterized in that** the light-guiding cover has a first region for guiding the radiation substantially emitted by the radiation transmission unit (2) and a second region for guiding the surrounding light onto the light sensor (13).

6. Sensor arrangement (1) according to Claim 5, **characterized in that** the radiation transmission unit (2) emits infrared radiation and the first region is designed such that substantially only infrared radiation can be guided.

7. Sensor arrangement (1) according to one of Claims 1 to 6, **characterized in that** the second sensor device is arranged on a printed circuit board (17), wherein the shielding screen (3) is arranged substantially between the printed circuit board (17) and the cover such that emitted radiation is prevented from striking the sides and/or light beams from a direction other than the specific direction are blocked.

8. Sensor arrangement (1) according to Claim 7, **characterized in that** the shielding screen (15) is arranged substantially in the shape of a hollow cylinder between the printed circuit board (17) and the cover.

9. Sensor arrangement (1) according to Claim 7 or 8, **characterized in that** the shielding screen is arranged in a plurality of parts with a plurality of partially cylindrical hollow cylinder parts (16) on a base part (7) of the housing (3, 7) so that a hollow cylindrical shielding screen (15) with one or more longitudinal slits is formed, with the printed circuit board having a cutout which corresponds to the cross section of the shielding screen (15) and through which the shielding screen (15) extends.

## Revendications

1. Dispositif de capteur combiné (1), pour la détection de la lumière ambiante et de la pluie, comprenant une première installation de capteur pour reconnaître des gouttes sur une surface,
la première installation de capteur ayant une unité d'émission de rayonnement (2) qui émet un rayonnement vers une surface,
le rayonnement est réfléchi pratiquement à un point de réflexion (11) de la surface en direction d'une unité de réception de rayonnement (10), et
en fonction de l'intensité du rayonnement réfléchi, on détermine l'existence de gouttes sur la surface,
une seconde installation de capteur pour déterminer l'intensité de la lumière ambiante, cette installation ayant un capteur optique (13) pour mesurer l'intensité des rayons lumineux venant d'une certaine direction,
le dispositif de capteur (1) étant logé dans un boîtier (3, 7) et la seconde installation de capteur est protégée par un écran (15) contre le rayonnement émis par l'unité d'émission de rayonnement (2) et/ou les rayons lumineux arrivant d'autres directions que la direction déterminée,
**caractérisé en ce que**
le boîtier (3, 7) comporte une couverture (3) transparente à la lumière, cette couverture étant réalisée pour coupler le rayonnement émis par l'unité d'émission de rayonnement (2) et éliminer ainsi le rayonnement couplé après sa réflexion, pour fournir le rayonnement à l'unité de réception de rayonnement (10).

2. Dispositif de capteur combiné selon la revendication 1,
**caractérisé en ce que**
l'unité d'émission de rayonnement (2) et l'unité de réception de rayonnement (10) ainsi que le capteur optique sont logés dans le boîtier (3, 7) et le point de réflexion (11) se situe à l'extérieur d'une zone transparente à la lumière à mesurer par le capteur optique.

3. Dispositif de capteur combiné selon la revendication 1 ou 2,
**caractérisé en ce que**
le capteur optique (13) est placé entre l'unité d'émission de rayonnement (2) et l'unité de réception de rayonnement (10).

4. Dispositif de capteur combiné selon l'une des revendications 1 à 3,
**caractérisé en ce que**
la couverture (3) transparente à la lumière présente au moins une autre surface formée pour diriger le rayonnement émis dans une zone d'entrée de rayonnement de la couverture et/ ou le rayonnement réfléchi vers l'unité de réception de rayonnement (10).

5. Dispositif de capteur combiné selon l'une des revendications 1 à 4,
**caractérisé en ce que**
la couverture transparente à la lumière présente une première zone pour diriger le rayonnement émis principalement par l'unité d'émission de rayonnement (2) et une seconde zone pour diriger la lumière ambiante sur le capteur optique (13).

6. Dispositif de capteur combiné selon la revendication 5,
**caractérisé en ce que**
l'unité d'émission de rayonnement (2) émet un rayonnement infrarouge et la première zone est conçue pour ne laisser passer pratiquement que le rayonnement infrarouge.

7. Dispositif de capteur combiné selon l'une des revendications 1 à 6,
**caractérisé en ce que**
la seconde installation de capteur est montée sur une plaque de circuit (17), l'écran (3) étant situé pratiquement entre la plaque de circuit (17) et la couverture pour bloquer toute incidence latérale du rayonnement émis et/ou des rayons lumineux venant d'une autre direction que la direction déterminée.

8. Dispositif de capteur combiné selon la revendication 7,
**caractérisé en ce que**
l'écran (15) est pratiquement en forme de cylindre creux placé entre la plaque de circuit (17) et la couverture.

9. Dispositif de capteur combiné selon les revendications 7 ou 8,
**caractérisé en ce que**
l'écran est en plusieurs parties avec plusieurs pièces de cylindre creux (16) en deux parties de cylindre, installées sur le fond (7) du boîtier (3, 7) pour constituer un écran (15) en forme de cylindre creux ayant une ou plusieurs fentes dirigées dans la direction longitudinale, la plaque de circuit ayant une cavité correspondant à la section de l'écran (15) et à travers laquelle passe l'écran (15).
